# EUROPEAN PATENT SPECIFICATION

(11) **EP 2 487 124 B1**
(45) Date of publication and mention of the grant of the patent: **18.12.2013**
(21) Application number: 12250023.4
(22) Date of filing: 10.02.2012
(51) Int. Cl.: B65G 45/00, B65G 45/18, B65G 45/22, B08B 1/00

(54) **An overhead rail cleaner**
Schienenreiniger für Hängeleitungen
Nettoyeur de rail aérien

(30) Priority: 14.02.2011 US 931902
(43) Date of publication of application: 15.08.2012
(73) Proprietor: Jensen USA, Inc., Panama City, Florida 32405 (US)
(72) Inventor: Thorpe, James Christopher, Panama City, FLorida 32409 (US)
(74) Representative: Franks & Co (South) Limited

(56) References cited:
- EP-A1- 0 887 470
- DE-A1- 10 208 507
- US-A- 3 786 779

## Description

### Field

This invention relates to a cleaning device for an overhead rail system according to the preamble of claim 1 for materials handling, and especially for a rail system for a commercial laundry.

### Background

In commercial laundries, dirty laundry and clean laundry are generally moved about the premises in collapsible bags which are supported at their upper ends by a rigid ring. These rings in turn are generally supported from wheeled trolleys which are movable on overhead conveyor rails to facilitate movement of the laundry bags around the site. The rails provide a track for the movement of the trolleys and the rail systems are generally inclined to the horizontal in order to use gravity to assist in the transfer of bags around the laundry.

The overhead rail system tends to collect dirt and dust over a prolonged period of time and it is possible for the dust/dirt to inhibit movements along the rails and to be transferred to clean laundry. This is obviously highly undesirable and the present invention provides for an overhead rail cleaning device. Such devices are known in other industries, see for example US 4019 492 and US 5671 839 but are unsuitable for use in commercial laundries because the dirt removed from the rail is widely scattered by the cleaning brushes. GB 2417 470A discloses an overhead rail cleaner in which the cleaner comprises a single unit suspended from the rail and in which the cleaner is driven along the rail by a drive wheel with the cleaner motor operating both the drive wheel and brushes.

Document DE 102 08 507 discloses a cleaning device as stated in the preamble of claim 1.

A problem with the above cleaners is that on some tracks the cleaner cannot move freely around curves in the track.

### Statements of Invention

According to the present invention there is provided a cleaning device as stated in claim 1.

Preferably, each of said two units is provided with at least one link bar thereon which extends towards the other unit, the two link bars being pivotally connected. The two link bars may be vertically off-set with a pivot pin extending between the two link bars. In the preferred arrangement there are two pairs of link bars interconnecting the top portion and lower portion of the two units.

A suction device is mounted on the cleaner unit and has at least one conical air intake port adjacent the cleaning brushes for collection of dirt and dust particles removed from the rail.

Preferably, the cleaning brushes are rotary circular brushes having axes of rotation substantially normal to the rail. The brushes may be each mounted on a support plate which is adjustably mounted to the body.

The brushes are powered rotary brushes driven by an electric motor which is mounted on the cleaner unit. The motor may be a DC electric motor powered by a battery also mounted on the cleaner unit.

The drive wheel on the drive unit is powered by a second DC electric motor mounted on the drive unit and powered by a respective battery also mounted on the drive unit. The second motor may be a reversible drive motor allowing the drive wheel to be operated in two rotational directions. The drive wheel and brushes may be operated through gear trains and/or drive belts or chains.

The operation of the brushes, suction device, and drive wheel may be controlled through a pre-programmable control unit mounted on one unit and operatively connected to the other unit and which may be operated through a remote control unit.

The cleaning and drive units may be substantially enclosed within a removable housing, which may comprise several panels, which is also mounted on the body and each housing may be provided with resiliently biased outwardly facing end panels to act as buffers and operates a stop sensor in the event of contact with an obstacle on the rail.

The rail cleaning device may be provided on at least one unit with a laser sensor thereon directed towards the track to detect breaks in the track.

The rollers may formed on a trolley having a similar construction to the trolley described in GB 2317 866 in which the planes of rotation of the rollers on the two arms converge towards the load with a mutual angle therebetween in the range of 40-70 degrees of arc, preferably about 50 degrees.

Another aspect of the invention provides a rail system for a commercial laundry which includes a cleaning device as disclosed herein.

### Description of Drawings

The invention will be described by way of example and with reference to the accompanying drawings in which:
- Fig.1: is a side view of an overhead rail and cleaning device according to the present invention,
- Fig. 2: is a plan view of the cleaning device with some components removed for clarity,
- Fig. 3: is a section on the line III-III of Fig.2,

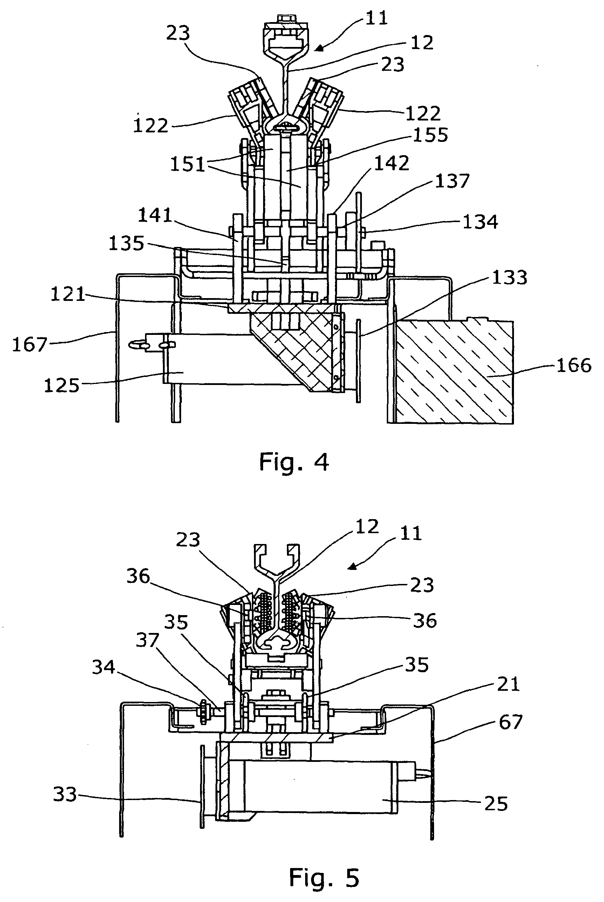

- Fig. 4: is a section on the line IV-IV of Fig.3, and
- Fig.5: is a section on the line V-V of Fig. 3.

### Detailed description of Invention

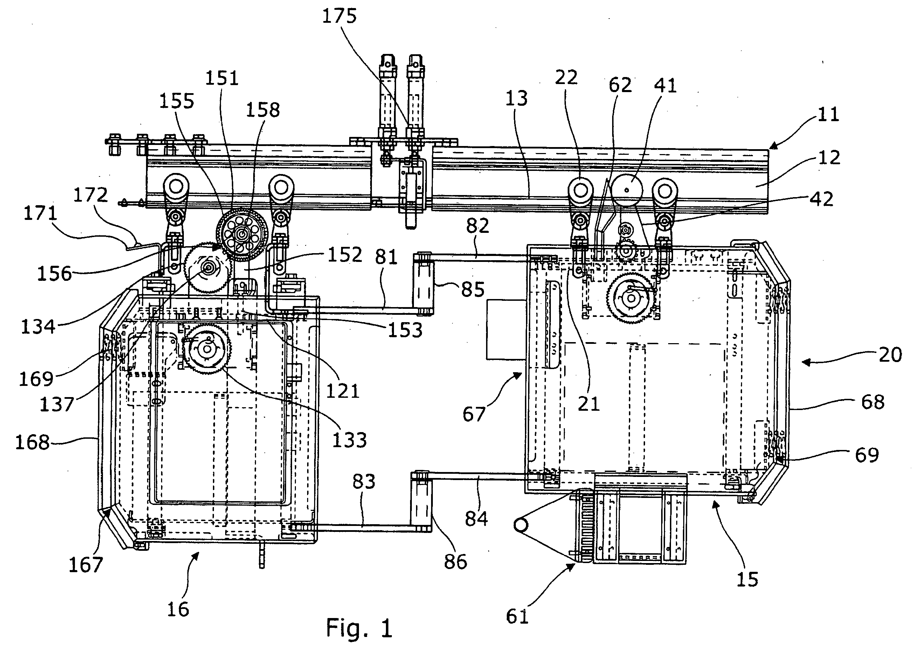

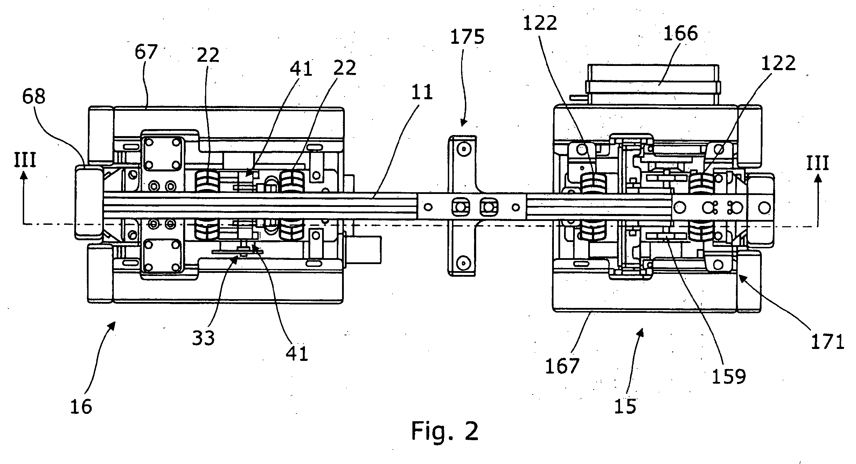

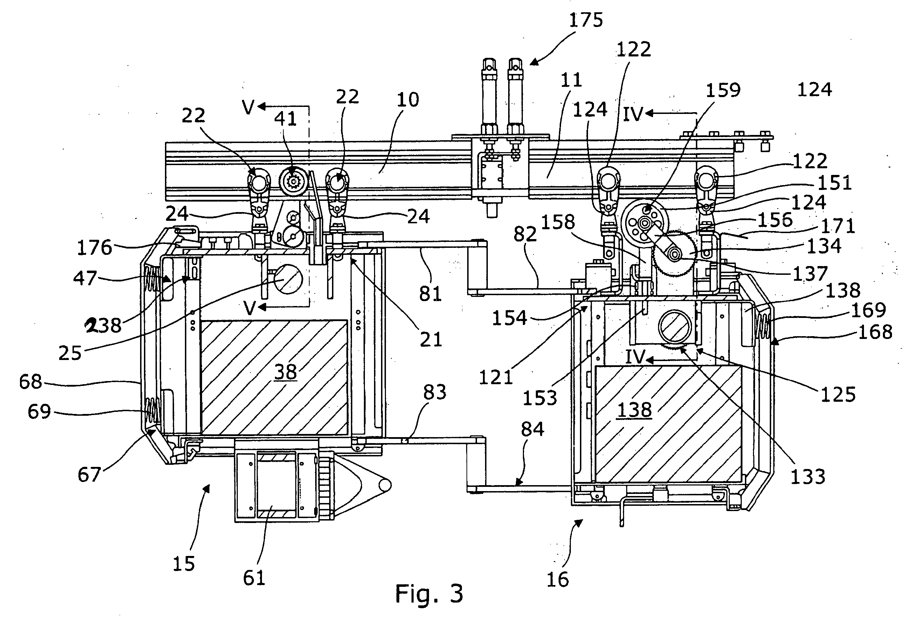

With reference to Figs. 1 to 3 of the drawings there is shown a section of overhead rail 11 having a central web 12 with a lower track portion 13 symmetrically arranged at its lower end. The track portion 13 has an upper surface on each side of the web 12 along which a cleaning device 20 according to the present invention can move. In use the rail 11 forms part of an overhead conveyor system for the movement of goods, especially laundry bags, around a commercial laundry.

The cleaning device 20 comprises a pair of units, a cleaning unit 15 and a drive unit 16. Each unit 15 and 16 has a respective body assembly 21, 121 which is made from a suitable material which could be steel plate. Each body 21 & 121 is suspended from the overhead rail 11 by a pair of spaced apart trolleys 22 and 122 respectively. The trolleys 22 & 122 are similar to those described in GB 2317866 where further details may be obtained. Each trolley 22, 122 is basically 'Y' shaped having two diverging arms and a vertical leg. Each arm has a roller 23 mounted at its upper end portion on its inner side adjacent the rail so that a roller 23 is located on each side of the web 12 with the rollers moving along the track portion 13. The planes of rotation of the two rollers 23 are inclined to the vertical in use and converge with a mutual angle therebetween of between 40-70 degrees of arc and preferably about 50 degrees of arc. Steel shackles 24 secure the body assembly 21 to each trolley 22 and similar shackles 124 secure the body assembly 121 to the trolleys 122.

The cleaner unit 15 includes pair of circular cleaning brushes 41 are located, one on each side of the rail web 12 with their axes of rotation normal to the rail. The brushes 41 are each rotatably supported at the upper end of a support plate 42 fixed to the body assembly 21. Each support plate 42 is adjustably mounted to the body assembly 21 to allow for re-positioning of the brushes relative to the rail. The brushes 41 are each driven by a respective DC electric motor 25 mounted underneath the body assembly 21. The DC motor 25 rotates a gear wheel 33 which turn drives gear wheel 34 on a first shaft 37 via a chain (not shown). The shaft 37 rotates gears 35 mounted thereon which in turn drive gears 36 via respective chains (not shown). The gears 36 in turn rotate the brushes 41. The different gear ratios of gear wheels determine the rotational speed of the brushes relative to the motor 25.

The cleaner unit 16 is substantially enclosed within a housing 67, preferably made from stainless steel and formed from a plurality of panels. The end panel facing outwardly away from the drive unit has a buffer 68 mounted thereon biased by springs 69 away from the housing 67. Movement of the buffer 68 against the spring bias may trigger a sensor 238 located on the body assembly 21 and which will cut off the drive if the cleaner unit hits a blockage on the track, for example a stationary laundry bag.

Also supported on the underside of the body assembly 21 is a DC powered vacuum cleaner 61 having at least one conically shaped suction pipe opening 62, preferably one per brush, directed towards the cleaning brushes. The pipe opening 62 is connected to the vacuum cleaner 61 via flexible pipe (not shown). The vacuum cleaner 61 collects any particulate matter removed from the rail by the cleaning brushes 41.

The motor 25 and vacuum cleaner 61 are powered by a battery 38 mounted in a box also secured to the support assembly 21. The motor 25 and vacuum cleaner 61 are both controlled by a pre-programmed control unit 166 mounted on the drive unit 16 to which it is connected via multi-core electrical cable (not shown). The control unit 166 may include a receiver which is responsive to signals from a remote control.

The drive unit 16 is provided with a second DC motor 125 mounted on the support assembly 121 and having a gearwheel 133 thereon. The gear wheel 133 is connected by a chain (not shown) to a second gear wheel 134 fixed to one end of a drive shaft 137. The drive shaft 137 is rotatably supported between a pair of brackets 141,142 on the upper side of the support assembly 121 and has a drive gear wheel 135 mounted on the shaft 137 rotationally fast therewith between the two brackets 141 ,142.

A pair of drive wheels 151 are rotatably mounted on an axle 159 held in a fork 152 whose stem 153 passes downwards through the support assembly 121. The two wheels 151 are resiliently biased into frictional engagement with the underside of the rail 11, preferably by a spring 154 acting between the support assembly 121 and the fork 152. The spring 154 is a coil spring arranged concentrically with the stem 153. The two drive wheels 151 have a driven gear wheel 155 located axially therebetween. The driven wheel gear 155 meshes with the drive gear 134, the two gears having a 1:1 ratio. The vertical movement of the drive wheels 151 is guided by two guide struts 156 which are pivotally connected at their one ends to the shaft 137 and at their other ends to the axle 159 for the drive wheels 151. The stem 153 passes loosely through an aperture in the support assembly to allow for any lateral movement caused by the rotational movement of the guide struts 156 about the shaft 137.

It can be seen that the DC motor drives 125 drives the friction drive wheels 151 and the power for the DC motor 125 is supplied by at least one battery 138 mounted on the support assembly 121.

The operation of the motor 125 and drive wheels 151 is controlled by the pre-programmed control unit 166 mounted on the support assembly 121. The control unit 166 operates the cleaner brushes 41 and vacuum cleaner 61 as previously described. The drive unit 16 may be substantially enclosed within a housing 167, preferably made from stainless steel and formed from one or more parts. The end panel facing away from the cleaner unit 15 has a buffer 168 mounted thereon biased by springs 169 away from the housing 16. In a similar way to the cleaner unit 15, movement of the buffer 168 against the spring bias may trigger a sensor 138 located on the body assembly 121 to cut the drive if the cleaner unit hits a blockage on the rail 11. The drive unit 16 has a bracket 171 on which a laser sensor 172 is mounted. The laser sensor is directed at the rail 11 and detects the presence of the rail. If break on track is detected the drive is cut-off.

The rail system is provided with an electrical charging station 175 for recharging the batteries 38, 138. The drive unit and cleaner unit are both recharged through a single recharging point 176 which is connected to both batteries via the control unit 166.

The two units 15 & 16 are pivotally linked on behind the other, preferably by two pairs of link bars, an upper pair 81,82 and a lower pair 83,84. The two pairs of link bars 81,82, & 83,84 are in alignment one above the other. The link bars 81 & 83 are mounted on the cleaner unit support assembly 21 and the link bars 82, 84 are mounted on the drive unit support assembly 121. The link bars in each pair are vertically off-set relative to each other and are pivoted relative to each other by pins 85,86 extending between the off-set bars in each pair. The pins 85,86 allow for movement in the horizontal plane only. The two pins, 85,86 could be replaced by a single elongated pivot pin.

In general, the cleaning device is an independent autonomous unit which can be sent around an empty rail network to clean the rails when the system is not in use. The cleaner unit 15 is pivotally linked to the drive unit allowing the cleaning device to move around rail systems with sharp curves or bends in the support rail. In general the cleaning device is driven around the track with the drive unit towing the cleaner unit. However the drive unit can operate in reverse if required.

## Claims

1. A cleaning device (20) for an overhead rail system and which comprises two units, a drive unit (16) and a cleaning unit (15), each with rollers (23) mounted thereon for movement along the rail, the cleaning unit (15) having cleaning brushes (41) thereon for cleaning opposite sides of the rail (11), and the two units (15 & 16) being pivotally linked in tandem one with the other, **characterized in that** the rollers (23) are also mounted for suspension of the respective units from the rail (11) and the drive unit (16) having a drive wheel (151) mounted thereon and which in use is resiliently biased against the underside of rail to move the two units (15 & 16) along the rail.

2. A cleaning device as claimed in Claim 1 wherein each of said two units (15 & 16) is provided with at least one link bar (81,83)(82,84) thereon which extends towards the other unit, the two link bars (81,82 or 83,84) being pivotally connected.

3. A cleaning device as claimed in Claim 1 or Claim 2, wherein the two link bars (81 & 82) or 83 & 84) are vertically off-set one above the other with a pivot pin (85, 86) or (86) extending between the two bars (81,82) (83,84).

4. A cleaning device as claimed in Claim 3 wherein there are two pairs of link bars (81,82) & (83,84) interconnecting the top portion and lower portion of the two units (15 & 16).

5. A cleaning device as claimed in any one of Claims 1 to 4, wherein a suction device (61) is mounted on the cleaner unit (15) and has at least one conically shaped air intake port (62) directed towards each cleaning brush (41) for collection of dirt and dust particles removed from the rail (11).

6. A cleaning device as claimed in any one of Claims 1 to 5, wherein the brushes(41)are powered rotary brushes driven by an electric motor (25) which is mounted on the cleaner unit (15), the motor being a DC electric motor powered by a battery (38) also mounted on the cleaner unit.

7. A cleaning device as claimed in Claim 6, wherein the battery (38) also powers the suction device(61).

8. A cleaning device as claimed in any one of Claim 1 to 7, wherein the drive wheel (151) on the drive unit (16) is powered by a second DC electric motor (125) mounted on the drive unit and powered by a respective battery (138) also mounted on the drive unit.

9. A cleaning device as claimed in claim 8, wherein the second electric motor (125) may be a reversible drive motor allowing the drive wheel (151) to be operated in two rotational directions.

10. A cleaning device as claimed in any one of Claims 5-7 and Claims 8 & 9 when dependant thereon, wherein the operation of the brushes(41), suction device (61), and drive wheel (151) may be controlled through a pre-programmable control unit (166) which may be operated through a remote control unit.

11. A cleaning device as claimed in any one of Claims 1 to 10, wherein the cleaning and drive units (15, 16) are substantially enclosed within a removable housings (67,167) which may comprise several panels and each housing (67 or 167) is provided with resiliently biased end panels (68,168) to act as buffers and operates a stop sensor (238, 138)in the event of contact with an obstacle on the rail.

12. A cleaning device as claimed in any one of Claims 1 to 11, wherein the drive unit has a laser sensor (172) thereon directed towards the rail track to detect breaks in the track.

13. A rail system for a commercial laundry and which includes a rail cleaning device as claimed in any one of Claims 1 to 12.

14. A rail system as claimed in Claim 13 when dependant upon Claims 6-9 and which is provided with a battery recharging station (175) for recharging the batteries (38,138) in the units (15,16) in situ on the overhead rail (11).

## Patentansprüche

1. Reinigungsgerät (20) für ein von der Decke abgehängtes Schienensystem, umfassend zwei Einheiten, eine Antriebseinheit (16) und eine Reinigungseinheit (15), jeweils mit daran montierten Rollen (23) zur Bewegung entlang der Schiene, wobei sich an der Reinigungseinheit (15) Reinigungsbürsten (41) zum Reinigen der gegenüberliegenden Seiten der Schiene (11) befinden, und die beiden Einheiten (15 und 16) in Tandemanordnung schwenkbar miteinander verbunden sind, **dadurch gekennzeichnet, dass** die Rollen (23) gleichzeitig so montiert sind, dass sie die Aufhängung der jeweiligen Einheiten an der Schiene (11) ermöglichen, und dass an der Antriebseinheit (16) ein Antriebsrad (151) montiert ist, das im Gebrauch federnd gegen die Unterseite der Schiene vorgespannt ist, um die beiden Einheiten (15 und 16) entlang der Schiene zu bewegen.

2. Reinigungsgerät gemäß Anspruch 1, wobei sich an jeder der beiden Einheiten (15 und 16) mindestens eine Verbindungsstange (81, 83) (82, 84) befindet, die zur jeweils anderen Einheit verläuft, wobei die beiden Verbindungsstangen (81, 82 bzw. 83, 84) schwenkbar miteinander verbunden sind.

3. Reinigungsgerät gemäß Anspruch 1 oder Anspruch 2, wobei die beiden Verbindungsstangen (81 und 82) bzw. (83 und 84) vertikal übereinander versetzt sind, wobei ein Schwenkzapfen (85, 86) bzw. (86) zwischen den beiden Verbindungsstangen (81, 82) (83, 84) verläuft.

4. Reinigungsgerät gemäß Anspruch 3, wobei es zwei Paare von Verbindungsstangen (81, 82) und (83, 84) gibt, welche den oberen Abschnitt und den unteren Abschnitt der beiden Einheiten (15 und 16) miteinander verbinden.

5. Reinigungsgerät gemäß einem der Ansprüche 1 bis 4, wobei an der Reinigungseinheit (15) eine Saugeinrichtung (61) montiert ist, die über mindestens eine konisch geformte Luftansaugöffnung (62) verfügt, welche in Richtung jeder Reinigungsbürste (41) gerichtet ist, um die Schmutz- und Staubpartikel zu sammeln, die von der Schiene (11) entfernt wurden.

6. Reinigungsgerät gemäß einem der Ansprüche 1 bis 5, wobei es sich bei den Bürsten (41) um angetriebene Rotationsbürsten handelt, die durch einen Elektromotor (25) angetrieben werden, der an der Reinigungseinheit (15) montiert ist, wobei es sich bei dem Motor um einen Gleichstromelektromotor handelt, der von einer Batterie (38) mit Strom versorgt wird, welche ebenfalls an der Reinigungseinheit montiert ist.

7. Reinigungsgerät gemäß Anspruch 6, wobei die Batterie (38) auch die Saugeinrichtung (61) mit Strom versorgt.

8. Reinigungsgerät gemäß einem der Ansprüche 1 bis 7, wobei das Antriebsrad (151) an der Antriebseinheit (16) durch einen zweiten Gleichstromelektromotor (125) angetrieben wird, der an der Antriebseinheit montiert ist und von einer entsprechenden Batterie (138) mit Strom versorgt wird, welche ebenfalls an der Antriebseinheit montiert ist.

9. Reinigungsgerät gemäß Anspruch 8, wobei es sich bei dem zweiten Elektromotor (125) um einen drehrichtungsumschaltbaren Antriebsmotor handelt, der die Betätigung des Antriebsrads (151) in zwei Drehrichtungen ermöglicht.

10. Reinigungsgerät gemäß einem der Ansprüche 5 bis 7 und der Ansprüche 8 und 9 bei Abhängigkeit von diesen, wobei die Betätigung der Büsten (41), der Saugeinrichtung (61) und des Antriebrads (151) über eine vorprogrammierbare Steuerungseinheit (166) gesteuert werden kann, die über eine Fernbedienungseinheit bedient werden kann.

11. Reinigungsgerät gemäß einem der Ansprüche 1 bis 10, wobei die Reinigungs- und Antriebseinheiten (15, 16) im Wesentlichen in abnehmbaren Gehäusen (67, 167) eingeschlossen sind, die aus mehreren Platten bestehen können, und jedes Gehäuse (67 oder 167) mit federnd vorgespannten Endplatten (68, 168) ausgestattet ist, um als Puffer zu agieren und einen Stoppsensor (238, 138) zu betätigen, falls es zum Kontakt mit einem Hindernis auf der Schiene kommt.

12. Reinigungsgerät gemäß einem der Ansprüche 1 bis 11, wobei an der Antriebseinheit ein Lasersensor (172) vorgesehen ist, der auf die Schienenbahn gerichtet ist, um Brüche in der Bahn zu erkennen.

13. Schienensystem für eine kommerzielle Wäscherei, das ein Schienenreinigungsgerät gemäß einem der Ansprüche 1 bis 12 umfasst.

14. Schienensystem gemäß Anspruch 13 bei Abhängigkeit von den Ansprüchen 6 bis 9, das mit einer Batterieladestation (175) zum Aufladen der Batterien (38, 138) in den Einheiten (15, 16) vor Ort auf der von der Decke abgehängten Schiene (11) ausgestattet ist.

## Revendications

1. Un dispositif de nettoyage (20) pour un système de rail aérien et qui comprend deux unités, une unité d'entraînement (16) et une unité de nettoyage (15), chacune avec des rouleaux (23) montés sur elle pour un déplacement le long du rail, l'unité de nettoyage (15) ayant des brosses de nettoyage (41) sur elle pour nettoyer des côtés opposés du rail (11), et les deux unités (15 et 16) étant liées de façon pivotante en tandem l'une avec l'autre, **caractérisé en ce que** les rouleaux (23) sont également montés pour la suspension des unités respectives par rapport au rail (11) et l'unité d'entraînement (16) ayant une roue d'entraînement (151) montée sur elle et qui lors de l'utilisation est sollicitée de façon élastique contre le dessous du rail pour déplacer les deux unités (15 et 16) le long du rail.

2. Un dispositif de nettoyage tel que revendiqué dans la revendication 1 dans lequel chacune desdites deux unités (15 et 16) est pourvue d'au moins une barre de liaison (81, 83) (82, 84) sur elle qui s'étend vers l'autre unité, les deux barres de liaison (81, 82 ou 83, 84) étant raccordées de façon pivotante.

3. Un dispositif de nettoyage tel que revendiqué dans la revendication 1 ou la revendication 2, dans lequel les deux barres de liaison (81 et 82 ou 83 et 84) sont décalées de façon verticale l'une au-dessus de l'autre avec une broche sur pivot (85, 86) ou (86) s'étendant entre les deux barres (81, 82) (83, 84).

4. Un dispositif de nettoyage tel que revendiqué dans la revendication 3 dans lequel il y a deux paires de barres de liaison (81, 82) et (83, 84) raccordant entre elles la portion de dessus et la portion inférieure des deux unités (15 et 16).

5. Un dispositif de nettoyage tel que revendiqué dans l'une quelconque des revendications 1 à 4, dans lequel un dispositif d'aspiration (61) est monté sur l'unité nettoyante (15) et a au moins un orifice d'entrée d'air (62) configuré de façon conique dirigé vers chaque brosse de nettoyage (41) pour recueillir la saleté et les particules de poussière enlevées du rail (11).

6. Un dispositif de nettoyage tel que revendiqué dans l'une quelconque des revendications 1 à 5, dans lequel les brosses (41) sont des brosses rotatives motorisées entraînées par un moteur électrique (25) qui est monté sur l'unité nettoyante (15), le moteur étant un moteur électrique à courant continu alimenté par une batterie (38) également montée sur l'unité nettoyante.

7. Un dispositif de nettoyage tel que revendiqué dans la revendication 6, dans lequel la batterie (38) alimente également le dispositif d'aspiration (61).

8. Un dispositif de nettoyage tel que revendiqué dans l'une quelconque des revendications 1 à 7, dans lequel la roue d'entraînement (151) sur l'unité d'entraînement (16) est alimentée par un deuxième moteur électrique à courant continu (125) monté sur l'unité d'entraînement et alimenté par une batterie (138) respective également montée sur l'unité d'entraînement.

9. Un dispositif d'entraînement tel que revendiqué dans la revendication 8, dans lequel le deuxième moteur électrique (125) peut être un moteur d'entraînement réversible permettant à la roue d'entraînement (151) de fonctionner dans deux directions rotationnelles.

10. Un dispositif de nettoyage tel que revendiqué dans l'une quelconque des revendications 5 à 7 et des revendications 8 et 9 lorsque dépendantes de celles-ci, dans lequel le fonctionnement des brosses (41), du dispositif d'aspiration (61), et de la roue d'entraînement (151) peut être commandé par le biais d'une unité de commande pré-programmable (166) qui peut fonctionner par le biais d'une unité de commande à distance.

11. Un dispositif de nettoyage tel que revendiqué dans l'une quelconque des revendications 1 à 10, dans lequel les unités de nettoyage et d'entraînement (15, 16) sont substantiellement enfermées à l'intérieur de logements amovibles (67, 167) qui peuvent comprendre plusieurs panneaux et chaque logement (67 ou 167) est pourvu de panneaux d'extrémité sollicités de façon élastique (68, 168) pour faire office de tampons et faire fonctionner un capteur d'arrêt (238, 138) en cas de contact avec un obstacle sur le rail.

12. Un dispositif de nettoyage tel que revendiqué dans l'une quelconque des revendications 1 à 11, dans lequel l'unité d'entraînement a un capteur laser (172) sur lui dirigé vers la voie de rail pour détecter des interruptions dans la voie.

13. Un système de rail pour une blanchisserie commerciale et qui inclut un dispositif de nettoyage de rail tel que revendiqué dans l'une quelconque des revendications 1 à 12.

14. Un système de rail tel que revendiqué dans la revendication 13 lorsque dépendante des revendications 6 à 9 et qui est pourvu d'une borne de rechargement de batteries (175) pour recharger les batteries (38, 138) dans les unités (15, 16) in situ sur le rail aérien (11).
